# EUROPEAN PATENT APPLICATION

(11) **EP 2 811 421 A2**
(43) Date of publication of application: **10.12.2014**
(21) Application number: 14170135.9
(22) Date of filing: 27.05.2014
(51) Int. Cl.: G06F 21/56

(54) **Malicious code blocking method using management system for monitoring status of vaccine**

(30) Priority: 07.06.2013 KR 20130065197
(71) Applicant: Estsoft Corp., Seoul 137-867 (KR)
(72) Inventor: Kim, Jang Joong, Seoul 137-814 (KR); Kim, Song Jin, Seoul 138-839 (KR); Kim, Jun Seob, Seoul 134-053 (KR)
(74) Representative: Spengler, Robert

(57) **Abstract**

The present invention relates to a malicious code blocking method using a management system for monitoring a state of a vaccine, and more specifically, to a malicious code blocking method using a management system for monitoring a state of a vaccine, in which the management system connected through the Internet monitors in real-time whether or not a vaccine program installed in an individual user terminal normally operates and transmits an alarm to a user when the vaccine program does not operate normally, thereby removing a malicious code.

According to the present invention, since an error or a paralyzed state of a vaccine program which cannot be easily understood by general users is informed in real-time, the vaccine program can be promptly normalized regardless of the knowledge and interest of a user, and thus it is effective in that infection and additional damage of the malicious code can be prevented.

## Description

### BACKGROUND OF THE INVENTION

### Field of the Invention

The present invention relates to a malicious code blocking method using a management system for monitoring a state of a vaccine, and more specifically, to a malicious code blocking method using a management system for monitoring a state of a vaccine, in which the management system connected through the Internet monitors in real-time whether or not a vaccine program installed in an individual user terminal normally operates and transmits an alarm to a user if the vaccine program does not operate normally, thereby removing a malicious code.

### Background of the Related Art

Vaccine programs are disclosed to remove spyware which steals user information stored in a computer or a smart phone or a malicious code used for a DDOS attack or the like which attacks a specific web site by manipulating a plurality of terminals.

Generally, a security program is driven in such a manner that a vaccine program is installed in a terminal (a computer, a smart phone or the like), and when a malicious code penetrates into the terminal and conducts an abnormal action, the vaccine program stops operation of the malicious code and deletes risk factors.

Recently, a technique of a remote server for controlling a vaccine program installed in a terminal and performing a procedure of sensing, curing and deleting a malicious code and restoring the terminal is also disclosed.

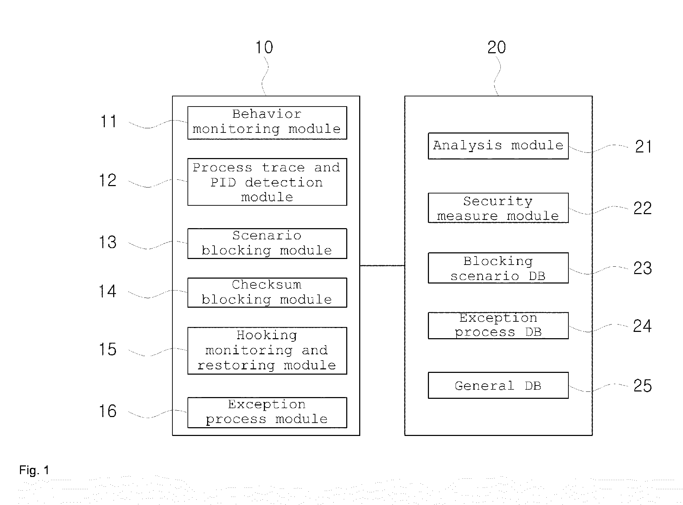

FIG. 1 is a block diagram showing the configuration of a malicious program blocking system according to a conventional technique.

As shown in FIG. 1, the malicious program blocking system of a conventional technique is configured of a user terminal and a security server.

Here, the user terminal 10 is configured of a behavior monitoring module 11, a process trace and PID detection module 12, a scenario blocking module 13, a checksum blocking module 14, a hooking monitoring and restoring module 15 and an exception process module 16, and the security server 20 is configured of an analysis module 21, a security measure module 22, a blocking scenario DB 23, an exception process DB 24 and a general DB 25.

The behavior monitoring module 11 of the user terminal 10 monitors behaviors of a process, and the process trace and PID detection module 12 traces behaviors of a process from which an abnormal behavior is sensed and detects the PID of the process.

The scenario blocking module 13 compares a list of sequence of behaviors performed by a process with a blocking scenario at a given time and blocks the process if they are matched.

The checksum blocking module 14 blocks an execution program when the checksum of the execution program is matched.

When a malicious program operates after inserting a code in another process to hide itself, the hooking monitoring and restoring module 15 senses the operation and restores the process.

The exception process module 16 handles a process matching to the exception process DB 24 received from the security server 20 as an exception of monitoring and blocking.

The analysis module 21 of the security server 20 analyzes statistical information received from the user terminal 10 and discriminates an attacking trend or an attack from the many.

The security measure module 22 takes an action such as registration of an additional blocking scenario, spread of a blocking scenario or the like.

The general DB 25 stores information on blocking conditions, information on generation of abnormal behaviors of each user terminal 10 and information on malicious programs.

The exception process DB 24 is transferred to each user terminal 10 and used for exceptions of monitoring based on behaviors.

The blocking scenario DB 23 is transferred to each user terminal 10 and used for matching and blocking a process based on behaviors.

A method of detecting a malicious program in real-time by analyzing behaviors of a process using the configuration described above defines first a list of malicious program scenarios in advance in the security server.

At this point, the malicious program scenarios include a list of abnormal behaviors such as generation of a session, transmission of packets to multiple IPs, generation of spoofing, transmission and reception of packets, file open, creation of a file, detection of IDT hook, creation of a service, service open, access to physical memory, creation of a process, access to another process, invasion into important function tables of an operating system, behavior of concealing its action, registration of automatic start of a program, attempt of keyboard hacking, registry hiding, access to other processes, behavior of invading into the address space of another process, an unnamed process, a process without a parent, creation of an execution file, write mode of an execution file, load of a device driver, behavior of forcibly terminating other processes and the like.

In addition, the abnormal behavior list further includes a dummy abnormal behavior which ignores any behavior and detects and blocks a malicious process by matching a program executed in a user terminal to the malicious program scenario.

When an abnormal situation occurs in a process executed in the terminal, the conventional technique uses a method of identifying a type of a malicious code which generates the abnormal situation and removing risk factors by driving or transmitting a vaccine program capable of removing corresponding malicious codes.

However, as an age of "one vaccine for one PC" is beginning recently, countermeasures against malicious codes are strengthened, and the lifecycle of a malicious code is shortened. Accordingly, malicious codes capable of extending the lifespan of the malicious codes and acting for an extended period of time by attacking and paralyzing the vaccine software itself are massively appeared recently. The "vaccine execution disturbance malicious code" practically paralyzes a target vaccine by disturbing execution itself of the vaccine or disturbing important functions such as testing or updating although the vaccine is executed.

Since a vaccine once infected with an execution disturbance malicious code cannot normally perform a function, a user should download a separate program such as a dedicated vaccine developed by a vaccine company and inspect and cure the infected vaccine. Since such a solution requests a user himself or herself to recognizes the malicious code and obtain a dedicated vaccine to deal with the malicious code, the user should have sufficient knowledge and deep interest in the vaccine and actively use the vaccine.

However, since most of users are lack of knowledge and interest in the vaccine, a user does not recognize that the vaccine installed in the terminal of the user is already infected and paralyzed, and thus damages continue to occur.

### SUMMARY OF THE INVENTION

Accordingly, the present invention has been made in view of the above-mentioned problems occurring in the prior art, and it is an object of the present invention to provide a malicious code blocking method using a management system for monitoring a state of a vaccine, in which the management system connected to a user terminal through the Internet monitors whether or not a vaccine program installed in the user terminal normally operates and, if the vaccine program has an execution error or does not operate normally, informs the execution error or abnormal operation of the vaccine program to the user terminal by transmitting a guide mail.

To accomplish the above object, according to an aspect of the present invention, there is provided a method of grasping a state of a vaccine 110 installed in a user terminal 100 and informing a user of whether or not the vaccine 110 is infected with a malicious code through the Internet 300 by a management system 200 connected to the user terminal 100, and the method includes: a first step of transmitting and storing user information including contact information of the user in the management system 20, by the user terminal, if the vaccine 110 is installed in the user terminal 100; a second step of creating execution state information by monitoring operation of the vaccine 110 and transmitting the execution state information to the management system 200, by a vaccine state monitoring unit 130 included in the user terminal 100; a third step of grasping whether or not the vaccine 110 normally operates by analyzing the execution state information transmitted from the user terminal 100, by the management system 200; and a fourth step of informing the user that the vaccine 110 is infected with the malicious code, by the management system 200, if the vaccine 110 is paralyzed by the malicious code and does not operate normally.

The third step determines that the vaccine 110 is paralyzed by the malicious code if the vaccine 110 does not operate when the management system 200 executes the vaccine 110, if a real-time monitoring function of the vaccine 110 is not activated, or if an automatic update function of the vaccine 110 is not executed.

The third step determines that the vaccine 110 is paralyzed by the malicious code if the management system 200 does not receive the execution state information from the user terminal 100.

In the fourth step, the management system 200 informs the user that the vaccine 110 is infected with the malicious code through an e-mail or a character message of a cellular phone.

### BRIEF DESCRIPTION OF THE DRAWINGS

FIG. 1 is a block diagram showing the configuration of a malicious program blocking system according to a conventional technique.
FIG. 2 is a block diagram showing a connection state of a management system according to an embodiment of the present invention.
FIG. 3 is a flowchart illustrating the procedure of a malicious code blocking method according to the present invention.

### DESCRIPTION OF SYMBOLS

100: User terminal 110: Vaccine
112: Vaccine execution unit 114: Real-time monitoring unit
116: Update unit
120: Malicious code removal unit
130: Vaccine state monitoring unit
140: Communication unit
200: Management system 300: Internet

### DETAILED DESCRIPTION OF THE PREFERRED EMBODIMENT

Hereinafter, "a malicious code blocking method using a management system for monitoring a state of a vaccine" (hereinafter, referred to as a 'blocking method') according to an embodiment of the present invention will be described with reference to the attached drawings.

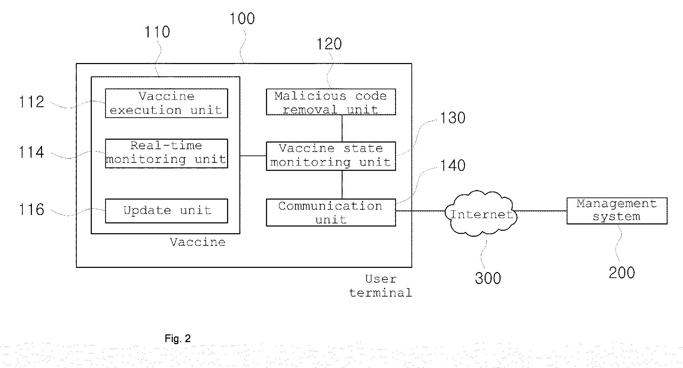

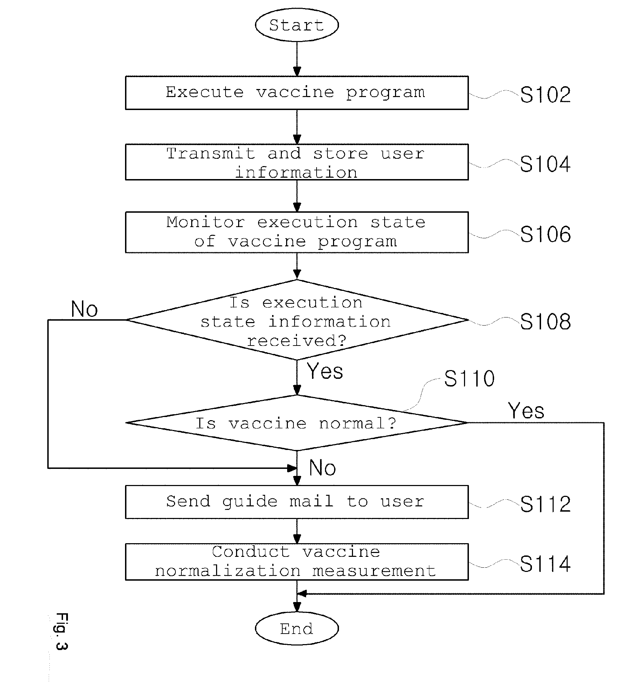

FIG. 2 is a block diagram showing a connection state of a management system according to an embodiment of the present invention, and FIG. 3 is a flowchart illustrating the procedure of a malicious code blocking method according to the present invention.

A 'user terminal 100' described in the present invention means a device such as a general PC, a notebook computer, a smart phone, a tablet PC or the like and, other than these, includes all kinds of terminals capable of connecting to the Internet and installing a vaccine 110 for removing a malicious code.

The vaccine 110 is installed in the user terminal 100 and removes a malicious code penetrating into the user terminal 100 or blocks invasion of the malicious code.

A malicious code removal unit 120 operates in separation from the vaccine 110 and removes a malicious code penetrating into the user terminal 100 on behalf of the vaccine 110 paralyzed by the malicious code.

A vaccine state monitoring unit 130 monitors whether or not the vaccine 110 installed in the user terminal 100 normally operates and creates execution state information indicating whether or not the vaccine 110 is in a normal state. The execution state information includes information on whether or not a malicious code detection and removal operation of the vaccine 110 is normally executed, whether or not processes of the user terminal 100 are monitored in real-time and penetration of a malicious code is prevented, whether or not the user terminal is connected to a system distributing the vaccine 110 and updates the vaccine with a program of a latest version, and the like.

A communication unit 140 includes a protocol for connecting to the Internet 300, transfers information on the state of the user terminal 100 to the management system 200, and displays a notification mail or the like transmitted from the management system 200 to the user.

The management system 200 may be a system for creating and distributing general vaccine programs, and it may send a guide mail when the vaccine program installed in the user terminal 100 is in an abnormal state or may control to automatically normalize the vaccine program depending on settings.

Describing the blocking method of the present invention in detail with reference to FIG. 3, first, a user downloads and installs a vaccine program in the user terminal 100 and executes the vaccine program (S102). Although it is general that the vaccine program is received from the management system 200, the vaccine program can be downloaded and installed from other vaccine distribution companies and integrated and managed by the management system 200.

If the vaccine 110 is executed, the vaccine 110 detects and removes malicious codes installed in the user terminal 100, monitors in real-time whether or not a malicious code flows in, and performs an update operation so that the installed vaccine 110 may maintain the latest version at all times.

In the process of installing the vaccine 110, the vaccine 110 progresses a service registration procedure for the user. That is, information on the system used by the user and user information including contact information (an e-mail address, a phone number, an SNS ID or the like) are transmitted and stored in the management system 200 (S104). The user information stored in the management system 200 is referenced when a guide mail is sent to the user terminal 100 in which the vaccine 110 does not operate normally.

Since a user may use a plurality of user terminals 100, it is preferable to assign identification information such as a name, a number or the like of each user terminal 100 when the user information is registered.

After the installation of the vaccine 110 and the registration of the user information are completed, the management system 200 transfers a command for monitoring, in real-time, an execution state of the vaccine 110 installed in the user terminal 100, and the vaccine state monitoring unit 130 continuously monitors operation of the vaccine 110 according to the command and creates execution state information (S106).

If the vaccine 110 is paralyzed by a malicious code and an execution error occurs, a phenomenon of forcibly terminating and does not resuming the vaccine 110 occurs. Various execution error symptoms such as unresponsiveness, display of various kinds of error message windows and the like appear depending on malicious codes. At this point, a user having insufficient knowledge of the vaccine program or the malicious code misunderstands the symptoms as a bug of the vaccine program, not as an infection of the malicious code, and does not take a special action.

In addition, some malicious codes only prevent update of the vaccine 110 by terminating operation of the update unit 116. In this case, although the vaccine 110 looks as if normally operates, it can be infected with a new malicious code since it cannot be updated with a latest version, and the user cannot recognize such a problem.

The real-time monitoring function may also be blocked depending on malicious codes. When the real-time monitoring function is paralyzed, additional invasion and activities of malicious codes cannot be prevented.

If a malicious code operates while the vaccine 110 is paralyzed as described above, personal information stored in the user terminal 100 can be leaked, and the user terminal 100 can be used as a zombie PC in a variety of cyber-crimes including DDOS. In addition, various data stored in the terminal of the user can be deleted or distorted.

The execution state information created by the vaccine state monitoring unit 130 is transmitted to the management system 200 in real-time or periodically, and if the management system 200 does not receive the execution state information from a specific user terminal 100, the management system 200 sends a guide mail to the user using the corresponding user terminal 100 (S108 and S112).

If an alarm is immediately transmitted to the user terminal 100 from which the execution state information is not received, the alarm may not be delivered to the user because of the malicious code which has already paralyzed the user terminal 100. Accordingly, hindrance of the malicious code can be avoided by transferring occurrence of the problem to the user in a third method (an e-mail) which is not subordinate to the user terminal 100.

In some circumstances, it may be set to send a character message to a phone number (of a cellular phone or the like) registered by the user or to transfer a message through an SNS system.

The user grasps which of the devices used by the user himself or herself is in an abnormal state through the identification information included in the guide mail or the character message and removes a malicious code by taking an action for normalizing the vaccine installed in a corresponding device (S114).

If the execution state information of the vaccine 110 is normally transferred to the management system 200, the management system 200 grasps whether or not the vaccine 110 is normally executed by analyzing the execution state information

(S112). If the vaccine 110 does not operate normally as a result of the analysis, the management system 200 sends a guide mail to the user in a method the same as described above.

The management system 200 confirms whether or not the vaccine 110 installed in the user terminal 100 is executed normally. That is, the management system 200 connects to the user terminal 100 through the Internet 300, executes the vaccine 110 and, and grasps whether or not whether or not the vaccine 110 operates according to a normal algorithm. If the vaccine 110 is not executed normally through the remote control of the management system 200, the vaccine 110 is determined as being infected with a malicious code.

In addition, it is confirmed whether or not the real-time monitoring function is activated in the user terminal 100, and the real-time monitoring function is activated remotely. If the real-time monitoring function is not activated normally and obstructed by another program, the vaccine 110 is determined as being infected with a malicious code.

In addition, it is confirmed whether or not the vaccine 110 is updated, and if the vaccine 110 is not in a latest version, infection of a malicious code may be suspected. If the version of the vaccine program is not in a latest version even though the vaccine 110 uses an automatic update function, the vaccine 110 is determined as being infected with a malicious code.

In order to normalize a vaccine which is paralyzed by a malicious code not to be executed normally, a separate dedicated vaccine program should be received from the management system 20 or a vaccine program manufacturing company and installed in the user terminal 100 of the user. The dedicated vaccine program may remove the malicious code which paralyzes the vaccine 110. In some cases, the previously installed vaccine 100 should be deleted, and a new vaccine 110 additionally including a malicious code removal algorithm should be installed. In the present invention, it is preferable that the malicious code removal unit 120 operating in separation from the vaccine 110 infected with a malicious code removes the malicious code penetrating into the user terminal 100.

According to the present invention, since an error or a paralyzed state of a vaccine program which cannot be easily understood by a general user is informed in real-time, the vaccine program can be promptly normalized regardless of the knowledge and interest of the user, and thus it is effective in that infection and additional damage of the malicious code can be prevented.

Although preferred embodiments of the present invention are described above with reference to the accompanying drawings, it is understood that those skilled in the art may embody the technical configuration in other specific forms without changing the technical spirits and essential features of the present invention. Therefore, it should be understood that the embodiments described above are exemplary and not restrictive in all aspects, and the scope of the present invention is defined by the appended claims rather than the above specific descriptions. It should be interpreted that all the changed and modified forms derived from the meaning, scope and equivalent concepts of the claims are included in the scope of the present invention.

## Claims

1. As a method of grasping a state of a vaccine 110 installed in a user terminal 100 and informing a user of whether or not the vaccine 110 is infected with a malicious code, by a management system 200 connected to the user terminal 100 through an Internet 300,
a malicious code blocking method using the management system for monitoring a state of the vaccine, comprising:
a first step of transmitting and storing user information including contact information of the user in the management system 20, by the user terminal, if the vaccine 110 is installed in the user terminal 100;
a second step of creating execution state information by monitoring operation of the vaccine 110 and transmitting the execution state information to the management system 200, by a vaccine state monitoring unit 130 included in the user terminal 100;
a third step of grasping whether or not the vaccine 110 normally operates by analyzing the execution state information transmitted from the user terminal 100, by the management system 200; and
a fourth step of informing the user that the vaccine 110 is infected with the malicious code, by the management system 200, if the vaccine 110 is paralyzed by the malicious code and does not operate normally.

2. The method according to claim 1, wherein the third step determines that the vaccine 110 is paralyzed by the malicious code if the vaccine 110 does not operate when the management system 200 executes the vaccine 110, if a real-time monitoring function of the vaccine 110 is not activated, or if an automatic update function of the vaccine 110 is not executed.

3. The method according to claim 1, wherein the third step determines that the vaccine 110 is paralyzed by the malicious code if the management system 200 does not receive the execution state information from the user terminal 100.

4. The method according to claim 2 or 3, wherein in the fourth step, the management system 200 informs the user that the vaccine 110 is infected with the malicious code through an e-mail or a character message of a cellular phone.
